# EUROPEAN PATENT SPECIFICATION

(11) **EP 3 201 787 B1**
(45) Date of publication and mention of the grant of the patent: **08.12.2021**
(21) Application number: 15846356.2
(22) Date of filing: 01.10.2015
(51) Int. Cl.: G06F 15/16, H04L 29/08, G05B 19/418, G05B 19/042

(54) **PORTABLE DEVICE AND METHOD FOR PRODUCTION CONTROL AND QUALITY CONTROL**
TRAGBARE VORRICHTUNG UND VERFAHREN ZUR PRODUKTIONSKONTROLLE UND QUALITÄTSKONTROLLE
DISPOSITIF PORTABLE ET PROCÉDÉ POUR UN CONTRÔLE DE PRODUCTION ET UN CONTRÔLE DE QUALITÉ

(30) Priority: 02.10.2014 US 201462059005 P
(43) Date of publication of application: 09.08.2017
(60) Divisional application: 21205384.7
(73) Proprietor: Iannello, Paul A., Springfield, TN 37115 (US); Iannello, Richard J., La Canada, CA 91011 (US); Stevens, Delano C., Franklin, TN 37067 (US); Stubblefield, Jarvis J., Hendersonville, TN 37075 (US)
(72) Inventor: Iannello, Paul A., Springfield, TN 37115 (US); Iannello, Richard J., La Canada, CA 91011 (US); Stevens, Delano C., Franklin, TN 37067 (US); Stubblefield, Jarvis J., Hendersonville, TN 37075 (US)
(74) Representative: Jakelski & Althoff Patentanwälte PartG mbB
(86) International application number: PCT/US2015/053507
(87) International publication number: WO 2016/054385

(56) References cited:
- WO-A1-2006/052459
- JP-A- H09 108 999
- JP-B1- 5 512 051
- JP-B1- 5 512 051
- US-A1- 2002 184 568
- US-A1- 2003 061 384
- US-A1- 2005 223 856

## Description

This International Application claims priority from U.S. Patent Application No. 14/872,363, titled "Portable Device and Method for Production Control and Quality Control," filed October 1, 2015; which is a non-provisional patent application that claims the benefit of U.S. Provisional Patent Application Serial No. 62/059,005, entitled "Portable Device And Method For Production Control And Quality Control", filed October 2, 2014.

### FIELD OF THE INVENTION

The invention relates to a portable device and method for production control and quality control. Specifically, the system and method provides a portable device and method for production control and quality control, giving the operator up to date work instructions and for collecting results data from industrial tools.

JP 5 512051 B1 and US 2015/370243 A1 describe a machining device unit that is used in an information coordination system in which information in numerical control data is coordinated between the machining device and a database server.

JP H09 108999 A describes a transmission and reception method of data using a network in a production system.

WO 2006/052459 A1 describes a wireless monitoring system for measuring and processing operational characteristics of a machine using a portable computer configured to receive instructions of a central computer.

US 2005/0223856 A1 describes a system for controlling a torque related data for a torque wrench. The torque wrench gas a first controller and is adapted to communicate to a second controller. The second controller is communicably coupled to th first controller and receives the torque data. A network computer is provided, which contains a database of work orders that are downloadable to the torque wrench.

### SUMMARY OF THE INVENTION

In accord with an aspect of the invention, a system for production control according to claim 1 is provided.

In accord with another aspect of the invention, a method for production control according to claim 5 is provided.

### BRIEF DESCRIPTION OF THE DRAWINGS

Figure 1 is a diagrammatic overview of network platform that may be used in one embodiment of a production control and quality control system;
Figure 2 is a diagram illustrating selected components of the server of the embodiment of Figure 1;
Figure 3 is a diagram illustrating selected components of one or more of the electronic devices according to the embodiment of Figure 1; and
Figure 4 is a flow diagram describing steps executed by the software program and client application according to the embodiment of Figures 2 and 3.

### DETAILED DESCRIPTION OF THE PREFERRED EMBODIMENTS

For the purpose of illustrating the invention, there is shown in the accompanying drawings several embodiments of the invention. However, it should be understood by those of ordinary skill in the art that the invention is not limited to the precise arrangements and instrumentalities shown therein and described below.

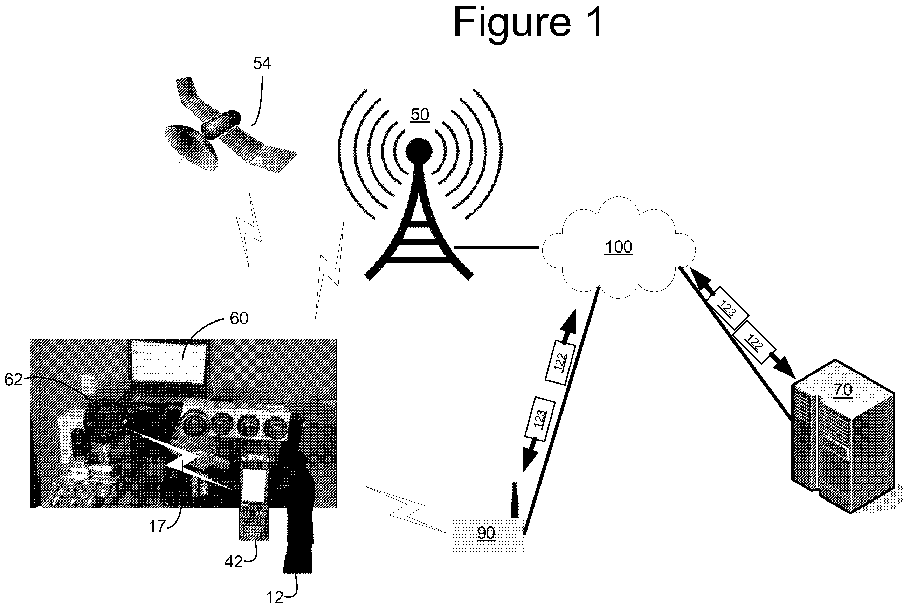

With reference to Figure 1, a diagrammatic overview of network platform that may be used in one embodiment of a portable device and method for production control and quality control. In one embodiment, a server computer 70 may comprise one or more complex instruction set computers (CISCs) or one or more reduced instruction set computers (RISCs). The server 70 may comprise a network connector that connects the server computer to a wide area network (WAN) 100. The WAN may comprise, for example, a virtual private network over the Internet.

In one embodiment, the Internet 100 may thus provide for secure connections with the server computer 70 to electronic devices connected to the Internet 100. The connection can best be covered under the umbrella of the Internet of Things (IoT). Said devices may include, by way of example and not by way of limitation, one or more personal mobile electronic devices 42 connected to Internet 100 via Wi-Fi or a cellular network 50, which may comprise a digital 2G, 3G, 4G, WMAX, near field communication (NFC), light emitting diode (LED), or other cellular network 50. A satellite network 54 may also or alternatively be used to connect with the server computer 70. In this regard, each personal mobile electronic device 42 may include, by way of example and not by way of limitation, a personal mobile communicator or cellular phone, smart phone, tablet, two-in-one, or any personal digital communicator.

In addition, in one embodiment, the mobile devices 42 may alternatively communicate with the Internet 100 via cellular towers 50 located in the cellular network. In the case of a mobile device 42 that may comprise a satellite enabled device, such as a satellite phone, communication with the Internet 100 may occur via a satellite 54.

However, in one embodiment, one or more of the devices 42 may include the TEKFLEX TF300i, TF200 or TF100 hand held device currently available from I and R Partners, Inc. of Madison, TN. In one embodiment, the TekFlex hand held device is able to connect to an industrial tool (62 in Figure 1) through a Bluetooth interface 63.

The handheld device 42 thus provides the operator downloaded up to date work instructions 123. Further, the handheld device 42 collects results data from the industrial tool 62. Further, the handheld device 42 also controls the industrial tool 62. The downloaded work instructions 123 may also include settings for the tool 62. Also, the work instructions may include 123 sequences for testing the industrial tool 62, and collecting results data, which may all be done through the handheld device 42.

Any of the above-described devices or tools may be Wi-Fi and/or Bluetooth enabled with a Wi-Fi, 4G, 3G, wireless, near field communication (NFC) and/or Bluetooth radio transceiver installed or integrated into the device as recognized by those of skill in the art. In this regard, a Wi-Fi hub 90 may optionally be used with any of such wireless-enabled devices to connected and communicate data 122, 123 over the Internet 100.

Further connected to the network may be one or more personal computing devices 60. Each personal computing device 60 may comprise, by way of example, a personal computer, a notebook computer, a tablet, a laptop computer, smart television (smart TV), Roku^{®} device, or the like.

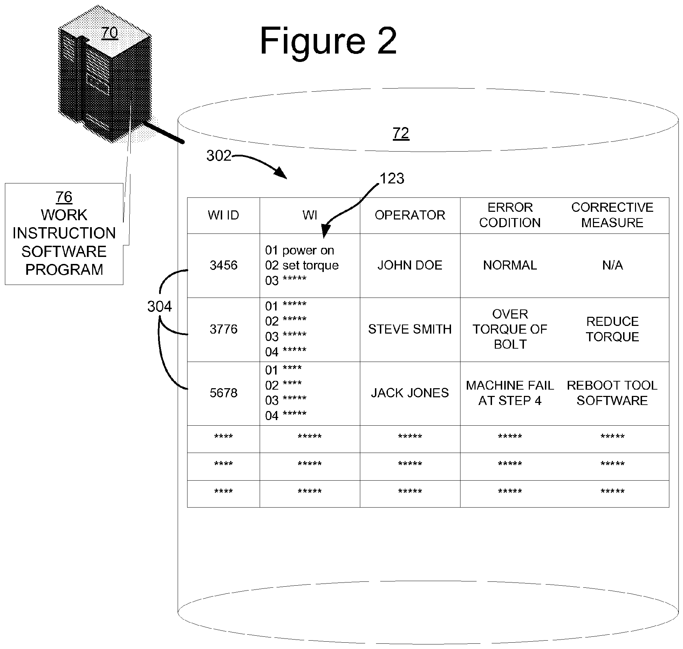

With reference to Figure 2, a diagram illustrating selected components of the server 70 of the embodiment of Figure 1 is shown. In one embodiment, the server 70 may comprise one or more sets of computer instructions, or software, that may comprise an on- call software program 76. Server 70 further comprises one or more storage devices 72 for storing one or more databases 302. The database includes records 304 associated with work instructions 123 for industrial tools 62. Each set of work instructions (WI) is stored in one or more WI fields in each record 304 of the database 302.

In the embodiment of Figure 2, each database record 304 is indexed by a work instruction ID. The work instruction ID is tied to the type of tool 62, and the job to be performed by the tool 62 and the operator 12. Optionally, operator names may be stored in the database records. Further, an error condition field stores whether there was an error in the operation of the tool 62. The error condition also stores more granular information, such as the type of error condition (e.g., normal, over torque, tool operation error, etc.), operator, and procedure in which the error occurred. Finally, corrective measures that may be applied to the tool 62 through the device 42 are stored, thus providing a feedback mechanism to correct the errors for the tool 62. The device 42 may contain, for example a keyboard input, on screen keyboard input, voice recognition software, touch screen, or any other types of input devices known to those skilled in the art capable of receiving input from an operator to define the error and/or to suggest corrective measures.

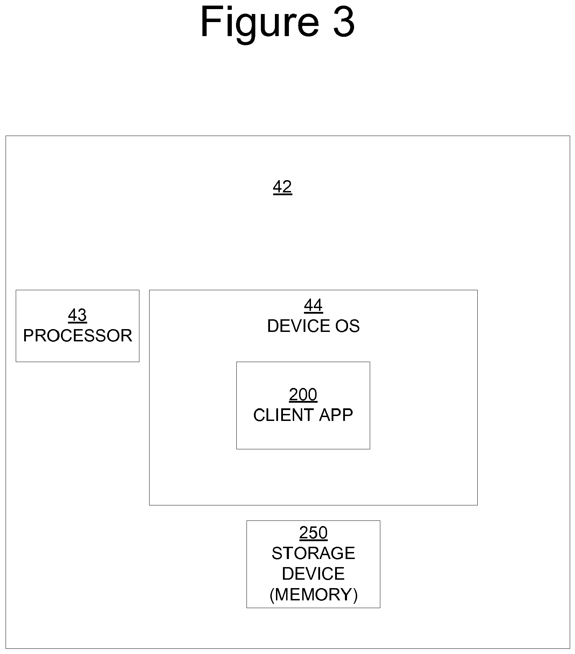

With reference to Figure 3, selected components of one or more of the portable devices 42 are shown according to the embodiment of Figure 1. In one embodiment, devices 42 may have differing operation systems, and other hardware components, the devices 42 typically have certain common features. While some form of the components of Figure 3 typically may exist in all the different types of devices 42 of Figure 1, the universal components will be described with respect to devices 42 in Figure 3, with those skilled in the art recognizing that these components may be in common with all types of devices 42 referenced and described above with respect to Figure 1. By way of example, and not by way of limitation, device 42 may include a processor 44, and an operating system configured to execute on the processor. A memory storage device 250 may further be included to store both application code for applications, and application data. One of those applications may comprise a client portion of the client application 200 that executes on devices 42. Of course, the operation, look and feel of the client application 200 may or may not have a different
configuration depending on whether the device 42 is a smart phone, tablet, or computer 60, TEKFLEX TF300i/TF200/TF100, or other type of device.

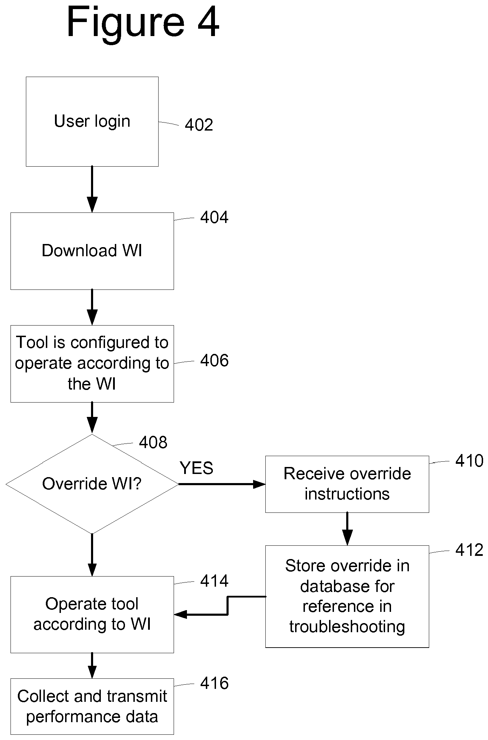

With reference to Figure 4, a flow diagram describing steps executed by the software program 76 and client application 200 according to the embodiment of Figures 2 and 3 is shown. It should be recognized by those of skill in the art that some steps are performed by the client application 200 locally, and the server application 76, depending on sharing of resources, communication bandwidth, and other factors for application efficiency. The steps will be described with this understanding.

In step 402, the user (12 in Figure 1) may login with their user name and password on the portable device 42, whereby the database record for the particular work instruction 123 is updated to reflect the user 12 that is operating the tool 62. In step 404, the portable device 404 interfaces with the server 72 to receive and update work instructions (WI) 123 on the portable device 62, which may include, for example assembly schedules or operation limits of the tool, such as upper and lower control limits. For example, the server may download both instructions for the user 12 and instructions to the tool 62. In step 406, the tool is then automatically be configured to operate according to the WI 123. For example, a compressor might be configured to provide a certain amount of torque to an air-wrench so the operator can use the air wrench to tighten lug nuts, or the like. Normally, the compressors' pressure is controlled by a dial or knob that is turned to adjust the holding tank's pressure. In embodiment, instead, a servo controlled actuator may be used to turn the shaft of the knob. The servo motor is powered by the compressor and a small receiver and circuit may control the stepper. This embodiment may be easily retrofittable to existing pumps in the field. In another embodiment, the pressure may be controlled by incorporation of a soft-switch that is incorporated within the compressor housing. The WI provides instructions to both the user and the tool to complete the task.

In step 408, in one embodiment, the operator has an option to override the WI 123 with procedures developed through the portable device 42. For example, pressure settings from a tool 62 comprising a hydraulic/pneumatic pump may be set through the device 42 comprising a TEKFLEX TF300i/TF200/TF100 to control a servo actuator. If so, then in step 410, the portable device is used to receive modifications to the WI 123. However, to keep integrity within the error checking method of the system, the portable device sends the modified instructions back to the server 72 to be stored in the records 304 of the database 302 in case the modified instructions do cause error in operation of the tool 62, step 412.

Those modified instructions may also including instructions that make sure the operator is operating the tool within specifications.

In step 414, the tool 62 is operated by the portable device 42 according to the WI 123. During operation, performance data during operation of the tool 62 may be collected by the portable device 42 and transmitted to the server 76 for storage in records 304 of database 302, and transmitted to other computer devices 60 for analysis, performance graph plotting, or other measurements on screen in real time.

In summary, the handheld device 42 may control tools 62 remotely either through a cable or wirelessly for production control / quality control while interfacing through a cloud server 72. The software 76, 200 of the system transforms and records the data values in records 304 for the industrial tools 62 (torque, size, etc.) and sends them to the cloud server 72 where remote supervisors can review, audit and control work. Those production values can be verified by the quality software 76. In embodiment, the quality control data can be transmitted or received to and from any measurement device that has a digital output. Transmission to the measurement device may be via wired or wireless channels by attaching a transceiver to the device. In this way, similar quality control data may be collected from the apparatus under construction directly, for example, from the unit on which lug nuts are being tightened. For example, very large pipe sections, like those for wind turbines, have a tightening spec for the nuts on the flange but also a levelling specification for the flange itself in order to keep the mono-pole as straight as possible. The levelling is checked by laser, calliper, etc. Data may be collected and stored with the production data to fully qualify an assembly job.

## Claims

1. A system for production control, comprising:
an electronic device;
a torque wrench that is controllable by the electronic device according to first and second one or more work instructions, the first and second one or more work instructions being configured to provide operation instructions for the torque wrench;
a server computer containing a database comprising the first and second one or more work instructions;
the electronic device comprising
one or more network connectors configured to connect to the server computer, wherein the first and second one or more work instructions are downloadable from the server computer to the electronic device through the one or more network connectors; and
the one or more network connectors being further configured to receive one or more error condition indicators and to provide correction work instructions to the torque wrench;
wherein the first one or more work instructions are updatable;
wherein the electronic device further comprises an input device;
wherein the input device is configured to receive input from an operator of the electronic device regarding operational errors experienced during operation of the torque wrench;
wherein the received input comprises corrective measures that is used for updating the first one or more work instructions to produce the second, updated work instructions to eliminate the operational errors;
wherein the one or more network connectors are configured to transmit the corrective measures to the server computer for updating the database with the second, updated work
instructions;
wherein the database comprises records associated with the one or more work instructions and the updated instructions that are stored in one or more fields in each record;
wherein each database record is indexed by a work instruction identifier (ID),
wherein the work instruction ID is related to a type of tool and a job to be performed by the tool and the operator;
wherein each record further comprises an error condition field that stores whether there was an error in the operation of the tool;
wherein the error condition field further stores a type of error condition, an operator, and procedure in which the error occurred;
wherein each record further stores a corrective measures field that stores the corrective measures to correct the error.

2. The system of claim 1, wherein the updated work instructions include correction of upper and lower control limits of the torque wrench.

3. The system of claim 1, wherein each of the one or more network connectors is of a type selected from the group consisting of: a wireless frequency interface (wifi), wireless interface, 2G, 3G, 4G, WMAX, near field communication (NFC), satellite, light emitting diode (LED) and Bluetooth.

4. The system of claim 1, wherein the electronic device is of a type selected from the group consisting of: a personal mobile communicator, cellular phone, smart phone, tablet, two-in-one device, personal computer, and personal digital communicator.

5. A method for quality control during use of an air wrench comprising:
connecting an air wrench that is controllable by an electronic device according to first and second one or more work instructions to the electronic device which is connected to a server computer using one or more network connectors comprised in the electronic device, the server computer containing a database comprising the first and second
one or more work instructions that are downloadable to the electronic device through the one or more network connectors; and
according to receiving by the server one or more error condition indicators and providing by the user correction work instructions to the server, providing by the server the second operation work instructions for the air wrench;
wherein the first one or more work instructions are updatable;
wherein the electronic device further comprises an input device;
wherein the input device is configured to receive input from an operator of the electronic device regarding operational errors experienced during operation of the air wrench;
wherein the received input comprises corrective measures that are suitable for updating the first one or more work instructions to produce the second, updated work instructions to eliminate the operational errors,
wherein the one or more network connectors are configured to transmit the corrective measures to the server computer for updating the database with the updated work instructions.
wherein the database comprises records associated with the one or more work instructions and the updated instructions that are stored in one or more fields in each record;
wherein each database record is indexed by a work instruction identifer (ID),
wherein the work instruction ID is related to a type of tool and a job to be performed by the tool and the operator;
wherein each record further comprises an error condition field that stores whether there was an error in the operation of the tool;
wherein the error condition field further stores a type of error condition, an operator, and procedure in which the error occurred;
wherein each record further stores a corrective measures field that stores the applicable corrective measures to correct the errors.

## Patentansprüche

1. System zur Produktionssteuerung, umfassend:
eine elektronische Vorrichtung;
einen Drehmomentschlüssel, der gemäß einer ersten und zweiten einen oder mehreren Arbeitsanweisungen durch die elektronische Vorrichtung gesteuert werden kann, wobei die ersten und die zweiten eine oder mehreren Arbeitsanweisungen eingerichtet sind, Betriebsanweisungen für den Drehmomentschlüssel bereitzustellen;
einen Servercomputer, der eine Datenbank enthält, die die ersten und zweiten einen oder mehreren Arbeitsanweisungen umfasst;
die elektronische Vorrichtung einen oder mehrere Netzwerkanschlüsse umfasst, die eingerichtet sind, sich mit dem Servercomputer zu verbinden, wobei die ersten und zweiten eine oder mehreren Arbeitsanweisungen von dem Servercomputer über den einen oder die mehreren Netzwerkanschlüsse auf die elektronische Vorrichtung heruntergeladen werden können; und
der eine oder die mehreren Netzwerkanschlüsse ferner eingerichtet sind, einen oder mehrere Fehlerzustandsindikatoren zu empfangen und Korrekturarbeitsanweisungen für den Drehmomentschlüssel bereitzustellen;
wobei die ersten eine oder mehreren Arbeitsanweisungen aktualisierbar sind;
wobei die elektronische Vorrichtung ferner eine Eingabevorrichtung umfasst;
wobei die Eingabevorrichtung eingerichtet ist, eine Eingabe von einem Bediener der elektronischen Vorrichtung bezüglich Betriebsfehlern zu empfangen, die während des Betriebs des Drehmomentschlüssels auftreten;
wobei die empfangene Eingabe Korrekturmaßnahmen umfasst, die für die Aktualisierung der ersten einen oder mehreren Arbeitsanweisungen verwendet werden, um die zweiten, aktualisierten Arbeitsanweisungen zu produzieren, um die Betriebsfehler zu beseitigen;
wobei der eine oder die mehreren Netzwerkanschlüsse eingerichtet sind, die Korrekturmaßnahmen an den Servercomputer übertragen, um die Datenbank mit den zweiten, aktualisierten Arbeitsanweisungen zu aktualisieren;
wobei die Datenbank Aufzeichnungen umfasst, die mit den einen oder mehreren Arbeitsanweisungen und den aktualisierten Anweisungen assoziiert sind, die in einem oder mehreren Feldern in jeder Aufzeichnung gespeichert sind;
wobei jede Datenbankaufzeichnung durch eine Arbeitsanweisungskennung (ID) indiziert ist,
wobei sich die Arbeitsanweisungs-ID auf einen Werkzeugtyp und einen von dem Werkzeug und dem Bediener durchzuführenden Auftrag bezieht;
wobei jede Aufzeichnung ferner ein Fehlerzustandsfeld umfasst, das speichert, ob bei dem Betrieb des Werkzeugs ein Fehler aufgetreten ist;
wobei das Fehlerzustandsfeld ferner einen Typ des Fehlerzustands, einen Bediener und ein Verfahren speichert, bei dem der Fehler aufgetreten ist;
wobei jede Aufzeichnung ferner ein Feld für Korrekturmaßnahmen speichert, das die Korrekturmaßnahmen speichert, um den Fehler zu korrigieren.

2. System nach Anspruch 1, wobei die aktualisierten Arbeitsanweisungen eine Korrektur der oberen und unteren Steuergrenzen des Drehmomentschlüssels beinhalten.

3. System nach Anspruch 1, wobei jeder der einen oder mehreren Netzwerkanschlüsse von einem Typ ist, der aus der Gruppe ausgewählt ist, bestehend aus: einer drahtlosen Frequenzschnittstelle (WiFi), einer drahtlosen Schnittstelle, 2G, 3G, 4G, WMAX, Nahfeldkommunikation (NFC), Satellit, Leuchtdiode (LED) und Bluetooth.

4. System nach Anspruch 1, wobei die elektronische Vorrichtung von einem Typ ist, der aus der Gruppe ausgewählt ist, bestehend aus: einem persönlichen mobilen Kommunikator, einem Mobiltelefon, einem Smartphone, einem Tablet, einer Zwei-in-Eins-Vorrichtung, einem Personal Computer und einem persönlichen digitalen Kommunikator.

5. Verfahren für die Qualitätskontrolle während der Verwendung eines Luftdruckschraubers, umfassend:
Verbinden eines Luftschraubers, der durch eine elektronische Vorrichtung gemäß einer ersten und zweiten eine oder mehreren Arbeitsanweisungen zu der elektronischen Vorrichtung gesteuert werden kann, die mit einem Servercomputer unter Verwendung eines oder mehrerer in der elektronischen Vorrichtung enthaltener Netzwerkanschlüsse verbunden ist, wobei der Servercomputer eine Datenbank enthält, die die ersten und zweiten eine oder die mehreren Arbeitsanweisungen enthält, die über den einen oder die mehreren Netzwerkanschlüsse auf die elektronische Vorrichtung heruntergeladen werden können; und
gemäß dem Empfangen durch den Server eines oder mehrerer Fehlerzustandsindikatoren und dem Bereitstellen durch den Benutzer von Korrekturarbeitsanweisungen für den Server, Bereitstellen der zweiten Betriebsarbeitsanweisungen für den Luftschrauber durch den Server;
wobei die ersten eine oder mehreren Arbeitsanweisungen aktualisierbar sind;
wobei die elektronische Vorrichtung ferner eine Eingabevorrichtung umfasst;
wobei die Eingabevorrichtung konfiguriert ist, um eine Eingabe von einem Bediener der elektronischen Vorrichtung bezüglich Betriebsfehlern, die während des Betriebs des Luftschraubers auftreten, zu empfangen;
wobei die empfangene Eingabe Korrekturmaßnahmen umfasst, die zum Aktualisieren der ersten eine oder mehreren Arbeitsanweisungen geeignet sind, um die zweiten, aktualisierten Arbeitsanweisungen zu produzieren, um die Betriebsfehler zu beseitigen,
wobei der eine oder die mehreren Netzwerkanschlüsse eingerichtet sind, die Korrekturmaßnahmen an den Servercomputer zu übertragen, um die Datenbank mit den aktualisierten Arbeitsanweisungen zu aktualisieren;
wobei die Datenbank Aufzeichnungen umfasst, die mit den eine oder mehreren Arbeitsanweisungen und den aktualisierten Anweisungen assoziiert sind, die in einem oder mehreren Feldern in jeder Aufzeichnung gespeichert sind;
wobei jede Datenbankaufzeichnung durch eine Arbeitsanweisungskennung (ID) indiziert ist,
wobei sich die Arbeitsanweisungs-ID auf einen Werkzeugtyp und einen von dem Werkzeug und dem Bediener durchzuführenden Auftrag bezieht;
wobei jede Aufzeichnung ferner ein Fehlerzustandsfeld umfasst, das speichert, ob bei dem Betrieb des Werkzeugs ein Fehler aufgetreten ist;
wobei das Fehlerzustandsfeld ferner einen Typ des Fehlerzustands, einen Bediener und ein Verfahren speichert, bei dem der Fehler aufgetreten ist;
wobei jede Aufzeichnung ferner ein Feld für Korrekturmaßnahmen speichert, das die anwendbaren Korrekturmaßnahmen speichert, um die Fehler zu korrigieren.

## Revendications

1. Système de contrôle de la production, comprenant :
un dispositif électronique ;
une clé dynamométrique qui peut être commandée par le dispositif électronique selon une ou plusieurs premières et secondes instructions de travail, la ou les plusieurs premières et secondes instructions de travail étant conçues pour fournir des instructions de fonctionnement destinées à la clé dynamométrique ;
un ordinateur serveur contenant une base de données comprenant la ou les plusieurs premières et secondes instructions de travail ;
le dispositif électronique comprenant un ou plusieurs connecteurs réseau conçus pour se connecter à l'ordinateur serveur, la ou les plusieurs premières et secondes instructions de travail étant téléchargeables à partir de l'ordinateur serveur vers le dispositif électronique par l'intermédiaire du ou des connecteurs réseau ; et
le ou les plusieurs connecteurs réseau étant en outre conçus pour recevoir un ou plusieurs indicateurs de condition d'erreur et pour fournir des instructions de travail de correction à la clé dynamométrique ;
dans lequel la ou les plusieurs premières instructions de travail sont actualisables ;
dans lequel le dispositif électronique comprend en outre un dispositif d'entrée ;
dans lequel le dispositif d'entrée est conçu pour recevoir une entrée provenant d'un opérateur du dispositif électronique concernant des erreurs de fonctionnement rencontrées pendant le fonctionnement de la clé dynamométrique ;
dans lequel l'entrée reçue comprend des mesures correctives permettant d'actualiser la ou les plusieurs premières instructions de travail afin de produire des secondes instructions de travail actualisées pour éliminer les erreurs de fonctionnement ;
dans lequel le ou les plusieurs connecteurs réseau sont conçus pour transmettre les mesures correctives à l'ordinateur serveur pour actualiser la base de données au moyen des secondes instructions de travail actualisées ;
dans lequel la base de données comprend des enregistrements associés aux une ou plusieurs instructions de travail et aux instructions actualisées qui sont stockées dans un ou plusieurs champs de chaque enregistrement ;
dans lequel chaque enregistrement de la base de données est indexé par un identifiant (ID) d'instruction de travail ;
dans lequel l'ID d'instruction de travail est lié à un type d'outil et à un travail à effectuer par l'outil et l'opérateur ;
dans lequel chaque enregistrement comprend en outre un champ de condition d'erreur qui enregistre s'il y avait une erreur dans le fonctionnement de l'outil ;
dans lequel le champ de condition d'erreur stocke en outre un type de condition d'erreur, un opérateur et la procédure au cours de l'erreur s'est produite ;
dans lequel chaque enregistrement stocke en outre un champ de mesures correctives qui enregistre les mesures correctives destinées à corriger l'erreur.

2. Système selon la revendication 1, dans lequel les instructions de travail actualisées comprennent la correction des limites de contrôle supérieure et inférieure de la clé dynamométrique.

3. Système selon la revendication 1, dans lequel le ou les plusieurs connecteurs réseau sont chacun d'un type choisi parmi le groupe constitué de : une interface de fréquence sans fil (wifi), une interface sans fil, 2G, 3G, 4G, WMAX, une communication en champ proche (NFC), satellite, diode électroluminescente (LED) et Bluetooth.

4. Système selon la revendication 1, dans lequel le dispositif électronique est d'un type choisi parmi le groupe constitué de : un communicateur mobile personnel, un téléphone cellulaire, un téléphone intelligent, une tablette, un dispositif deux en un, un ordinateur personnel et un communicateur numérique personnel.

5. Procédé de contrôle de la qualité pendant l'utilisation d'une clé pneumatique comprenant :
la connexion d'une clé pneumatique, qui peut être commandée par un dispositif électronique selon une ou plusieurs premières et secondes instructions de travail, au dispositif électronique qui est connecté à un ordinateur serveur à l'aide d'un ou plusieurs connecteurs réseau compris dans le dispositif électronique, l'ordinateur serveur contenant une base de données comprenant la ou les plusieurs premières instructions de travail qui sont téléchargeables vers le dispositif électronique par l'intermédiaire du ou des connecteurs réseau ; et
selon la réception, par le serveur, d'un ou plusieurs indicateurs de condition d'erreur et la fourniture, par l'utilisateur, d'instructions de travail de correction au serveur, la fourniture, par le serveur, des secondes instructions de travail de fonctionnement destinées à la clé pneumatique ;
dans lequel la ou les plusieurs premières instructions de travail sont actualisables ;
dans lequel le dispositif électronique comprend en outre un dispositif d'entrée ;
dans lequel le dispositif d'entrée est conçu pour recevoir une entrée provenant d'un opérateur du dispositif électronique concernant des erreurs de fonctionnement rencontrées pendant le fonctionnement de la clé pneumatique ;
dans lequel l'entrée reçue comprend des mesures correctives qui sont adaptées à l'actualisation de la ou des premières instructions de travail afin de produire des secondes instructions de travail actualisées pour éliminer les erreurs de fonctionnement ;
dans lequel le ou les plusieurs connecteurs réseau sont conçus pour transmettre les mesures correctives à l'ordinateur serveur pour actualiser la base de données au moyen des instructions de travail actualisées ;
dans lequel la base de données comprend des enregistrements associés aux une ou plusieurs instructions de travail et aux instructions actualisées qui sont stockées dans un ou plusieurs champs de chaque enregistrement ;
dans lequel chaque enregistrement de la base de données est indexé par un identifiant (ID) d'instruction de travail ;
dans lequel l'ID d'instruction de travail est lié à un type d'outil et à un travail à effectuer par l'outil et l'opérateur ;
dans lequel chaque enregistrement comprend en outre un champ de condition d'erreur qui enregistre s'il y avait une erreur dans le fonctionnement de l'outil ;
dans lequel le champ de condition d'erreur stocke en outre un type de condition d'erreur, un opérateur et la procédure dans laquelle l'erreur s'est produite ;
dans lequel chaque enregistrement stocke en outre un champ de mesures correctives qui enregistre les mesures correctives applicables destinées à corriger les erreurs.
